# EUROPEAN PATENT APPLICATION

(11) **EP 3 639 658 A1**
(43) Date of publication of application: **22.04.2020**
(21) Application number: 18200914.2
(22) Date of filing: 17.10.2018
(51) Int. Cl.: A01K 15/02

(54) **ASSEMBLED PET TOY DEVICE**

(71) Applicant: Chen, Li-Chen, 704 Tainan City (TW)
(72) Inventor: Chen, Li-Chen, 704 Tainan City (TW)
(74) Representative: Viering, Jentschura & Partner mbB Patent- und Rechtsanwälte

(57) **Abstract**

An assembled pet toy device (1) includes a base (10), a post assembly (50) and a plurality of lateral cylinders (32). The base (10) includes a plurality of first plates (12) are stacked one upon another, and the post assembly (50) is disposed on a top surface of the base (10). The post assembly (50) includes a plurality of first assemblies (20) and a plurality of second assemblies (30). The plurality of first assemblies (20) includes a plurality of second plates (21), and the plurality of second assemblies (30) includes a plurality of third plates (31). The plurality of lateral cylinders (32) is disposed on a side surface of the plurality of second assemblies (30), and the plurality of lateral cylinders (32) includes a plurality of fourth plates (34) stacked one upon another. The first plates (12), the second plates (21), the third plates (31) and the fourth plates (34) are respectively corrugated paper plates.

## Description

### BACKGROUND OF THE INVENTION

### 1. Field of the Invention

The present disclosure relates to an assembled pet toy device, and in particular, to a cat scratching assembled pet toy device.

### 2. Description of Related Art

When in nature, pets such as cats or dogs use claws to make scratches on the bark to leave glandular odor as a mark for marking territory. The process of scratching helps the cats or dogs shed old claws to facilitate the growth of new claws. Thus, even when the pets are kept at home, they still retain the habit of scratching.

In view of the above, pet owners usually use scratching boards or devices for allowing pets to scratch their claws. On the one hand, this can provide pets with a way to scratch their claws and vent emotions, and on the other hand, it can divert the attention of pets, to prevent pets from scratching on furniture or carpets and damaging home furnishings.

Existing pet scratching devices are mostly made of corrugated cardboard or hemp rope materials. When worn out, the existing pet scratching device can only be discarded in its entirety. Therefore, the user must waste money on repeated purchases, and generate a large amount of garbage.

In addition, most of the existing pet scratching devices are made in a board shape or a cylindrical shape, and have a bland appearance, so that their attraction to pets are limited.

For the above-mentioned reasons, various shortcomings are associated with the existing pet scratching devices. Therefore, the structural design of the related art still leaves much room for improvement.

### SUMMARY OF THE INVENTION

The main object of the present disclosure is to solve the disadvantages of existing pet toy devices, which are bland in design and must be discarded after being worn.

An exemplary embodiment of the present disclosure provides an assembled pet toy device, including a base, a post assembly, and a plurality of lateral cylinders. The base has a top surface and a bottom surface that are opposite to each other, the bottom surface of the base contacting the ground, and a plurality of first plates that are stacked one upon another for combining to form the base. The post assembly is disposed on the top surface of the base, the central axis of the post assembly and the top surface of the base being mutually perpendicular, and includes a plurality of second plates and a plurality of third plates arranged along the central axis of the post assembly to form the post assembly. The plurality of lateral cylinders respectively protrude from the side surfaces of the post assemblies, and respectively have a plurality of fourth plates, the plurality of fourth plates stacked one upon another to form the lateral cylinder.

Preferably, the plurality of first plates, the plurality of second plates, the plurality of third plates and the plurality of fourth plates are respectively corrugated paper plates.

Preferably, the base includes a base hole and a central rod. The base hole penetrates from a top surface of the base to a bottom surface of the base, and the center of the plurality of second plates and the plurality of third plates respectively have a hole portion. The central rod passes through the hole portions of the plurality of second plates and the third plates, and the base hole for combining them together to form the post assembly.

Preferably, the plurality of second plates are combined into a plurality of first assemblies, the plurality of third plates are combined into a plurality of second assemblies, and the plurality of first assemblies and the plurality of second assemblies combine to form the post assembly. The plurality of lateral cylinders are respectively disposed on the side surface of the plurality of second assemblies.

Preferably, the diameter of the base hole of the base, and the hole portions of the plurality of second plates and the third plates are respectively larger than the diameter of the central rod, and a plurality of protruding portions are respectively disposed on the inner surface of the base hole and the plurality of perforation sections. When the central rod penetrates into the base hole and the plurality of perforation portions, the base holes and the plurality of protruding portions of the perforation portions interfere with the central rod, and fix the central rod in the base hole and the plurality of perforation portions.

Preferably, the central rod includes a plurality of sleeves and at least one connecting member; wherein the plurality of sleeves are connected to each other to form the central rod, and at least one of the connecting member is respectively disposed between the two adjacent sleeves, so that the plurality of sleeves are connected to each other.

Preferably, the plurality of sleeves are respectively hollow circular tubes, each of the connecting members has two opposite sleeve portions, and the diameter of the two sleeve portions of each of the connecting members and the center diameter of the plurality of sleeves are matched to each other, so that the two sleeve portions of each of the connecting members can be respectively fitted to the inner side of the plurality of sleeves.

Preferably, the plurality of second plates, the plurality of third plates, and the plurality of fourth plates are respectively circular plates.

Preferably, the plurality of second plates and the plurality of third plates have the same shape and diameter, wherein the area and the diameter of the plurality of second plates and the plurality of third plates are smaller than those of the first plates. The plurality of fourth plates have the same shape and diameter, and the diameters of the plurality of fourth plates are smaller than the diameter of the plurality of second plates and the plurality of third plates.

The advantage of the present disclosure is that the assembled pet toy device can be easily assembled, and individual components thereof can be easily replaced, so as to effectively enhance its attraction to pets and achieve the purpose of soothing the pets and venting their emotions and energy.

For further understanding of the present disclosure, the following embodiments are provided to facilitate the disclosure of the present disclosure.

### BRIEF DESCRIPTION OF THE DRAWINGS

Fig. 1 is an assembled three-dimensional schematic view showing an assembled pet toy device of the present disclosure;
Fig. 2 is an exploded three-dimensional schematic view showing the assembled pet toy device of the present disclosure;
Fig. 3 is a partially exploded three-dimensional schematic view showing the assembled pet toy device of the present disclosure in the assembly process;
Fig. 4 is a side schematic view showing the assembled pet toy device of the present disclosure;
Fig. 5 is a planar view showing the base of the assembled pet toy device of the present disclosure;
Fig. 6 is a planar view showing the central rod being fixed in the base hole of the assembled pet toy device of the present disclosure;

### DETAILED DESCRIPTION OF PREFERRED EMBODIMENTS

The aforementioned illustrations and following detailed descriptions are exemplary for the purpose of further explaining the scope of the instant disclosure. Other objectives and advantages related to the instant disclosure will be illustrated in the subsequent descriptions and appended drawings. In addition, for an easy instruction, similar reference numbers or symbols refer to elements alike.

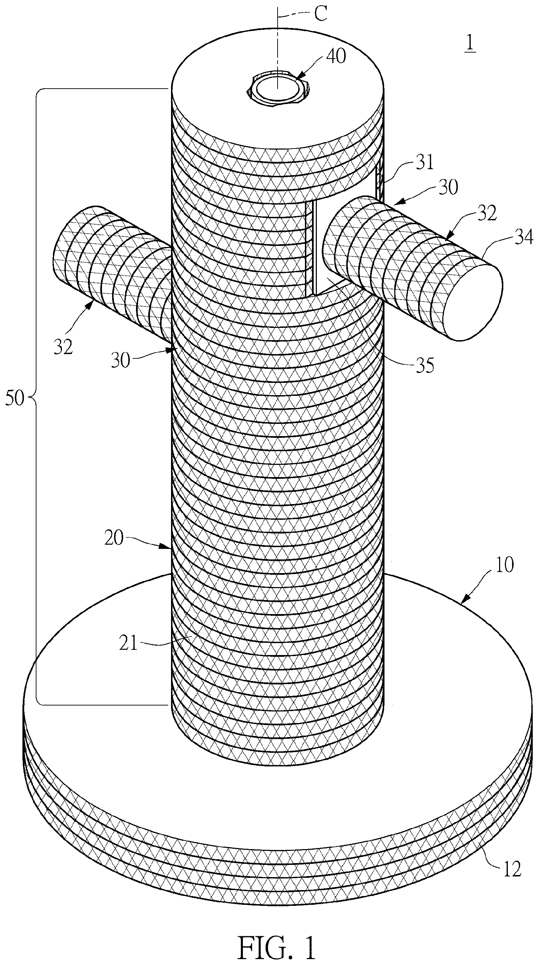

The assembled pet toy device of the present invention is a pet toy made of corrugated cardboard and is suitable for pet climbing or scratching. As shown in FIG. 1 to FIG. 3, the assembled pet toy device 1 mainly includes a base 10, a post assembly 50, and a plurality of lateral cylinders 32 disposed on the side surface of the combined post 50.

The base 10 is in the shape of a disk and is formed by a plurality of first plates 12 stacked one upon another, and the center of each of the plurality of first plates 12 has a perforation. After the plurality of first plates 12 are stacked one upon another, the center hole of the plurality of first plates 12 are combined to collectively form a base hole 11. The base 10 includes a top surface and a bottom surface opposite to each other, the bottom surface of the base contacts the ground or the desk, and the post assembly 50 is disposed on the top surface of the base 10.

The post assembly 50 is disposed on the center part of the top surface of the base 10, the post assembly 50 is substantially cylindrical, and the central axis C of the combination post 50 is substantially perpendicular to the top surface of the base 10. A plurality of the lateral cylinders 32 are respectively disposed on the side surface of the post assembly 50, wherein the plurality of lateral cylinders 32 are substantially perpendicular to the central axis C of the post assembly 50. When the assembled pet toy device 1 of the present invention is assembled, the user can set a plurality of the lateral cylinders 32 on the side surface of the post assembly 50 at different heights and different angles depending on the height of the pet or the habit of the pet, thus forming a post similar to a kung-fu post or a cactus-shaped post.

The post assembly 50 is formed by combining a plurality of second plates 21 and a plurality of third plates 31, in which a plurality of the second plates 21 can be stacked one upon another to form a plurality of first combining assemblies 20, a plurality of the third plates 31 can also be stacked one upon another to form a plurality of second assemblies, and a plurality of the lateral cylinders 32 are respectively disposed on the side surface of the second assemblies 30. In this embodiment, a plurality of the second plates 21 are separated from each other, so that the user can combine any number of the second plates 21 to form the first combining assembly 20, and increase or decrease the numbers of the second plates 21 to achieve the purpose of changing the height of the first assembly 20. Moreover, in this embodiment, the third plates 31 of the second assembly 30 can be adhered together through an adhesive, so that the third plates 31 of each second combining assembly 30 are integrated with each other.

Further, the side surface of the plurality of second assemblies 30 are provided with a plane portion 35, the lateral cylinders 32 are respectively disposed on the plane portion of the side surface of the second assemblies 30. The lateral cylinder 32 is formed by stacking a plurality of the fourth plates 34 together, and the plurality of the fourth plates 34 are adhered through the adhesive to form the lateral cylinder 32.

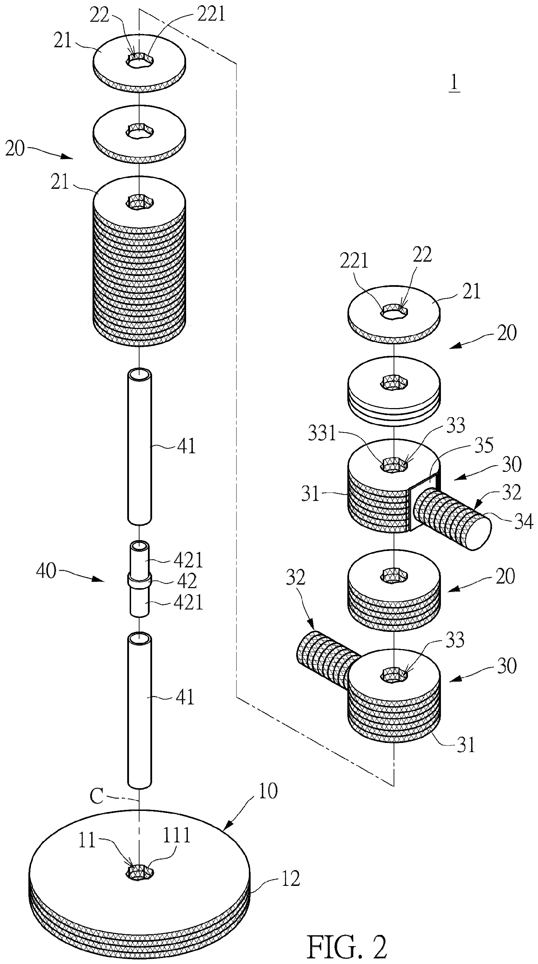

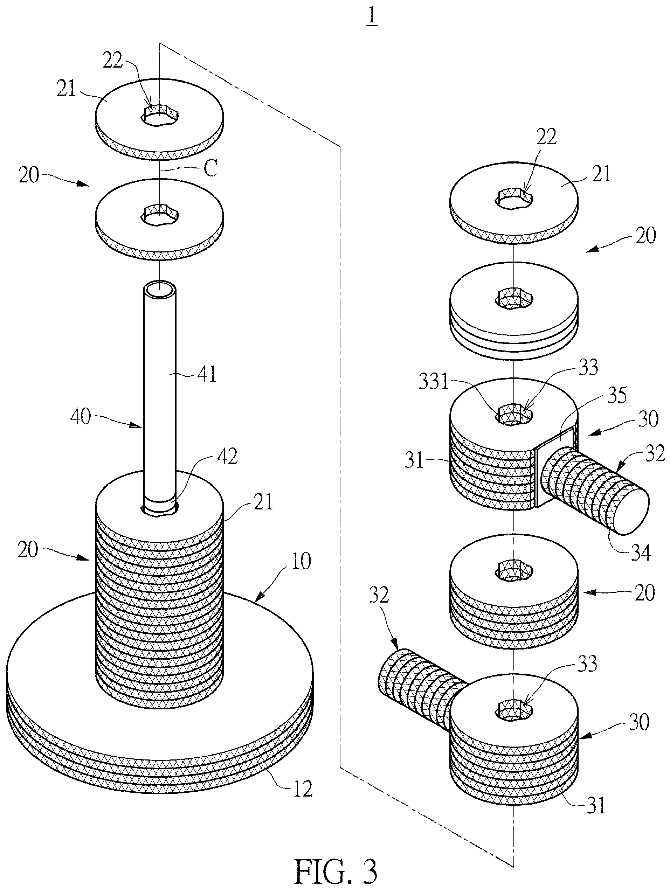

As shown in FIGS. 2 and 3, the first assemblies 20 and the second assemblies 30 of the assembled pet toy device 1 of the present invention are connected to the top surface of the base 10 through a central rod 40. The bottom end of the central rod 40 is inserted into the base hole 11, so that the central rod 40 is set at the center of the base 10 in a direction perpendicular to the top surface of the base 10. Each of the plurality of second plates 21 of the first combining assemblies 20 has a hole portion 22 formed respectively at a center thereof, and hole portion each of the third plates 31 of the second assemblies 30 has a hole portion 33 formed respectively at a center thereof. A plurality of hole portions 22 of the second plates 21 and a plurality of hole portions 33 of the third plates 31 can be fitted on the central rod 40, respectively. Therefore, a plurality of second plates 21 and a plurality of third plates 31 are combined to collectively form the post assembly 50.

Furthermore, in order to reduce the length of the central rod 40 when central rod being stored or packaged, the central rod 40 of the present invention adopts a multi-segment assembly structure. As shown in FIG. 2, the central rod 40 of this embodiment includes two sleeves 41 and a connecting member 42. The two sleeves 41 are hollow tubes made of cardboard. Two opposite sleeve portions 421 are respectively disposed at two ends of the connecting member 42. The diameters of the two connecting portions 421 of the connecting member 42 and the central diameter of the sleeves 41 are matched with each other, so that the two sleeve portions 421 can be respectively inserted into the inner holes of the sleeve 41 and mated with the inner holes of the sleeve 41 in a close-fit manner, which enable the connecting member 42 to link the two sleeves 41 together so as to form the central rod 40.

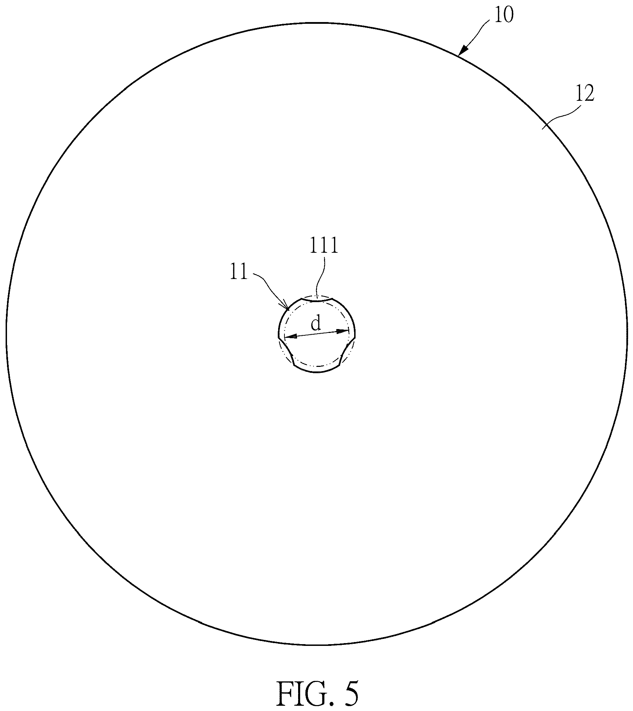

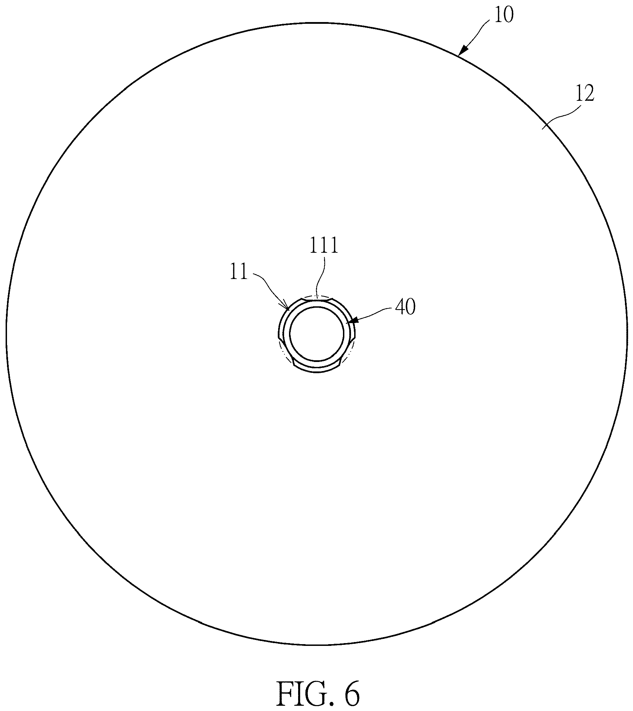

In addition, as shown in FIGS. 5 and 6, for the purpose of easily assembling the central rod 40 and the base 10 together, the diameter of the base hole 11 of the base 10 is arranged to be slightly larger than the outer diameter of the central rod 40. Further, a plurality of protruding portions 111 are disposed on the inner surface of the base hole 11, wherein the plurality of protruding portions 111 respectively extend from the inner surface of the base hole 11 toward the center of the base hole 11. The diameter d of a virtual circle, defined by connecting the end portions of the plurality of protruding portions 111, is smaller than the diameter of the central rod 40. Therefore, as shown in FIG. 6, when the central rod 40 is inserted into the base hole 11, a gap is maintained between the outer side wall of the central rod 40 and the inner surface of the base hole 11, but the ends of the plurality of protruding portions 111 of the perforation portions interfere with the central rod 40, so that the central rod 40 can be fixed in position at the center of the base hole 11 by being supported by the protruding portions 111.

Accordingly, when the central rod 40 is inserted into the base hole 11, the central rod 40 contacts only the ends of the plurality of protrusions 111 without contacting the inner surface of the base hole 11, so that the contact area between the central rod 40 and the base hole 11 can be reduced, and the friction generated when the central rod 40 is inserted into the base hole 11 can also be reduced. Therefore, based on the above positioning method, proper contact pressure is maintained between the central rod 40 and the base hole 11 so that the central rod 40 and the base 10 can be firmly combined; at the same time, the area of contact friction of the central rod 40 and the base hole 11 is limited to being at the end of the protruding portion 111 and the side of the central rod 40 so as to avoid excessive friction between the central rod 40 and the base hole 11, which may cause difficulties for users when inserting the central rod 40 into the base hole 11, or when pulling the central rod 40 out of the base hole 11.

Furthermore, in order to allow the second plates 21 and each of the third plates 31 of the second assemblies 30 to be easily fitted on the central rod 40, the hole portions 22 of the second plate 21 and the hole portions 33 of the third plate 31 have the same design as the base hole 11. The diameters of the hole portions 22 of the second plate 21 and the hole portions 33 of the third plate 31 are arranged to be larger than the diameter of the central rod 40, wherein a plurality of protruding portions 221, 331 are disposed inside the hole portions 22 and 33. The structural principles of the hole portions 22 and the protruding portions 221 on the second plate 21, and the hole portions 33 and the protruding portions 331 on the third plate 31 are the same as that of the base hole 11 and the protruding portion 111, and thus will not be repeated herein.

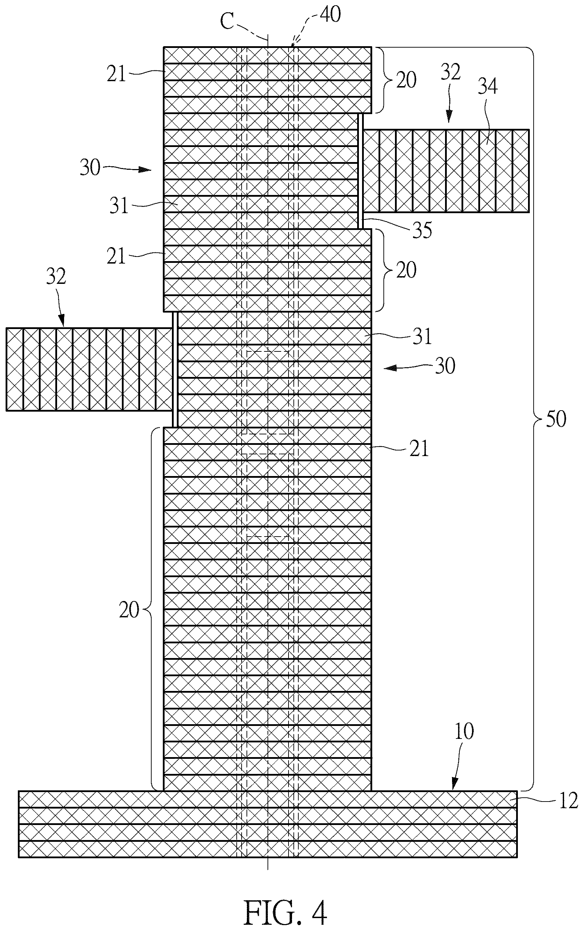

As shown in FIG. 3 and FIG. 4, when the assembled pet toy device 1 is assembled, the user first inserts the central rod 40 into the base hole 11 in the center of the base 10, and then fits the plurality of second plates 21 on the central rod 40 to form the first assemblies 20. Next, the rest of the second plates 21 and the plurality of second assemblies 30 are alternatingly sleeved around the central rod 40 to form the post assembly 50.

In the present embodiment, the first plate 12, the second plate 21, the third plate 31, and the fourth plate 34 are circular plates, so that the base 10, the post assembly 50, and the plurality of lateral cylinders 32 have a cylindrical shape. In this embodiment, the plurality of second plates 21 and the plurality of third plates 31 have the same shape and diameter, so that the post assembly 50 forms a cylinder having the same diameter from top to bottom. The diameters of the second plate 21 and the third plate 31 are arranged to be smaller than the diameter of the first plate 12 of the base 10, and likewise the diameter of the fourth plate 34 is arranged to be smaller than the diameters of the second plate 21 and the third plate 31, so that the diameter of the base 10 is larger than the diameter of the post assembly 50, and the diameter of the lateral cylinder 34 is smaller than the diameter of the post assembly50.

As shown in FIG. 1 and FIG. 4, after completing the assembly of the assembled pet toy device 1, the post assembly 50 is formed by a plurality of the first assemblies 20 and the second assemblies 30. When the user combines the post assembly 50, the height of each of the first assemblies 20 can be changed by adjusting the number of second plates 21 in each of the first assembly 20; in addition, the user can change the stacking order of the first assemblies 20 and the second assemblies 30, and adjust the height of the first assemblies 20, so that the lateral cylinders 32 of the second assemblies 30 can be positioned at different heights.

While assembling the second assemblies 30, the lateral cylinder 32 of the second assemblies 30 can be arranged in different directions, which makes the lateral cylinders 32 of the post assembly 50 have different heights and angles, so that the post assembly 50 can be shaped like a kung-fu post to attract pets to climb onto the post assembly 50 or the lateral cylinders 32.

The plurality of first plates, second plates, third plates and fourth plates of the assembled pet toy device 1 of the present invention can be made of corrugated cardboard, so that the outer surface of the base 10 and the post assembly 50 and the lateral cylinder 32 of the base 10 have a rough surface covered with holes and gaps. As such, when the pet scratches the side of the base 10, the post assembly 50, and the lateral cylinder 32 with claws, a large frictional force can be generated, giving pets a comforting feeling of tearing an object so as to vent their emotions and to satisfy their needs for scratching.

In summary, the advantages of the combined toy device 1 are as follows:

1. The combined toy device 1 according to the present disclosure is made of corrugated paper, which is an environmentally-friendly material, so that the manufacturing process thereof can be simple, resource-saving, and pollution-free.

2. The assembled pet toy device1 of the present invention can be changed to have a variety of shapes according to the user, so that the shape of the present invention can be diverse and interesting.

3. The assembled pet toy device 1 of the present invention can resemble a kung-fu post, wherein the material of the assembled pet toy device 1 can evoke the pet's desire to scratch and vent their energy and emotions.

4. The second plate 21 and the second assemblies 30 of the assembled pet toy device 1 of the present invention are detachable structures, so that the user can easily replace the parts that are worn out and avoid having to throw away the entire assembled pet toy device 1, thereby reducing garbage.

The above-mentioned descriptions represent merely the exemplary embodiment of the present disclosure, without any intention to limit the scope of the instant disclosure thereto. Various equivalent changes, alterations or modifications based on the claims of the instant disclosure are all consequently viewed as being embraced by the scope of the instant disclosure.

## Claims

1. An assembled pet toy device (1), comprising:
a base (10) including a top surface and a bottom surface opposite to each other, the bottom surface of the base (10) contacting the ground, wherein the base (10) has a plurality of first plates (12), and the plurality of first plates (12) are stacked one upon another for combining to form the base (10);
a post assembly (50) disposed on the top surface of the base (10), wherein the central axis (C) of the post assembly (50) and the top surface of the base (10) are mutually perpendicular, and the post assembly (50) includes a plurality of second plates (21) and a plurality of third plates (31) which are arranged along the central axis (C) of the post assembly (50) to form the post assembly (50); and
a plurality of lateral cylinders (32), wherein the plurality of lateral cylinders (32) respectively protrude from the side surfaces of the post assemblies (50) and respectively have a plurality of fourth plates (34), and the plurality of fourth plates (34) stacked one upon another to form the lateral cylinder (32).

2. The assembled pet toy device (1) according to claim 1, wherein the plurality of first plates (12), second plates (21), third plates (31) and the fourth plates (34) are respectively corrugated paper plates.

3. The assembled pet toy device (1) according to claim 2, wherein the base (10) includes a base hole (11), the base hole (11) penetrating from a top surface of the base (10) to a bottom surface of the base (10), and wherein the center of the plurality of second and third plates (21, 31) respectively have a hole portion (22, 33).

4. The assembled pet toy device (1) according to claim 3, further including a central rod (40) passing through the hole portions (22, 33) of the plurality of second and third plates (21, 31) and the base hole (11) for combining them together to form the post assembly (50).

5. The assembled pet toy device (1) according to claim 4, wherein the plurality of second plates (21) are combined into a plurality of first assemblies (20), the plurality of third plates (31) are combined into a plurality of second assemblies (30), and the plurality of first assemblies (20) and the plurality of second assemblies (30) combine to form the post assembly (50); and wherein the plurality of lateral cylinders (32) are respectively disposed on the side surface of the plurality of second assemblies (30).

6. The assembled pet toy device (1) according to claim 5, wherein the diameters of the base hole (11) of the base (10) and the hole portions (22, 33) of the plurality of second and third plates (21, 31) are respectively larger than the diameter of the central rod (40), and a plurality of protruding portions (111) are respectively disposed on the inner surface of the base hole (11) and the plurality of perforation sections; and wherein, when the central rod (40) penetrates into the base hole (11) and the plurality of perforation portions, the base holes (11) and the plurality of protruding portions (111) of the perforation portions interfere with the central rod (40), and fix the central rod (40) in the base hole (11) and the plurality of perforation portions.

7. The assembled pet toy device (1) according to claim 6, wherein the central rod (40) includes a plurality of sleeves (41) and at least a connecting member (42); and wherein the plurality of sleeves (41) are connected to each other to form the central rod (40), and at least one of the connecting member (42) is disposed between the two adjacent sleeves (41) to connect the plurality of sleeves (41) to each other.

8. The assembled pet toy device (1) according to claim 7, wherein the plurality of sleeves (41) are respectively hollow circular tubes, each of the connecting members (42) has two opposite sleeve portions (421), and the diameter of the two sleeve portions (421) of each of the connecting members (42) and the center diameter of the plurality of sleeves (41) are matched to each other, so that the two sleeve portions (421) of each of the connecting members (42) can be respectively fitted to the inner side of the plurality of sleeves (41).

9. The assembled pet toy device (1) according to claim 3, wherein the plurality of second plates (21), the plurality of third plates (31), and the plurality of fourth plates (34) are respectively in the shape of circular plates.

10. The assembled pet toy device (1) according to claim 9, wherein the plurality of second plates (21) and the plurality of third plates (31) have the same shape and diameter, the area and the diameter of the plurality of second plates (21) and the plurality of third plates (31) are smaller than those of the first plates (12); and wherein the plurality of fourth plates (34) have the same shape and diameter, and the diameter of the plurality of fourth plates (34) is smaller than the diameters of the plurality of second plates (21) and the plurality of third plates (31).
